# EUROPÄISCHE PATENTANMELDUNG

(11) **EP 0 693 526 A1**
(43) Veröffentlichungstag der Anmeldung: **24.01.1996**
(21) Anmeldenummer: 95110627.7
(22) Anmeldetag: 07.07.1995
(51) Int. Cl.: C08J 9/00

(54) **Verfahren zur Herstellung von harten Urethan- und gegebenenfalls Isocyanuratgruppen aufweisenden Schaumstoffen**

(30) Priorität: 20.07.1994 DE 4425614
(71) Anmelder: BAYER AG, D-51368 Leverkusen (DE)
(72) Erfinder: Wiedermann, Rolf, Dr., D-51519 Odenthal (DE); Weber, Hans-Ulrich, Dr., D-51381 Leverkusen (DE); Hoppe, Martin, Dr., Upper St. Clair, PA 15241 (US)

(57) **Zusammenfassung**

Harte Urethan- und gegebenenfalls Isocyanuratgruppen aufweisende Schaumstoffe werden durch Umsetzung von
a) Polyisocyanaten mit
b) mindestens zwei gegenüber Isocyanaten reaktionsfähige Wasserstoffatome aufweisenden Verbindungen vom Molekulargewicht 400 bis 10 000 in Gegenwart von
c) einem Polyurethan-Hartschaumpulver als organischem Füllstoff in Gegenwart von
d) Wasser und/oder leicht flüchtigen organischen Substanzen als Treibmittel und gegebenenfalls in Gegenwart von
e) mindestens zwei gegenüber Isocyanaten reaktionsfähige Wasserstoffatome aufweisenden Verbindungen vom Molekulargewicht 32 bis 399 sowie gegebenenfalls in Gegenwart von
f) an sich bekannten Hilfs- und Zusatzmitteln,
hergestellt.

## Beschreibung

Die Erfindung betrifft die Verwertung von pulverformigen Polyurethan(PUR)-Hartschaumstoffabfällen, die bei der Produktion von PUR-Hartschaumstoffen je nach Anwendungsgebiet im Bereich von 3 bis 25 Gew.-% entstehen. Generell besteht das Problem, diese Abfälle sinnvoll zu entsorgen.

Neben den Möglichkeiten der Verbrennung, Verpressung von Granulat oder Solvolyse steht die Wiederverwendung von gemahlenem PUR-Hartschaum aus Produktionsabfällen in PUR-Hartschaumstoffen der Recycling-Idee am nächsten.

Die Verwendung fein verteilter, unlöslicher nicht reaktiver Füllstoffe zur Verbesserung einzelner Hartschaumeigenschaften (z.B. Härte) unterhalb von 0,25 mm Durchmesser in Mengen bis 40 Gew.-% (DE-OS 20 24 810) bzw. von Quarzsand undefinierter Korngröße (30 bis 80 Gew.-% (DE-OS 2617 358) ist bekannt. Die Verwendung sehr feinkörnigen PUR-Weichschaumstoffmehls aus Produktionsabfällen bei der Weichschaumstoffherstellung ist ebenfalls bekannt.

Derart feinverteilte Füllstoffe aus Weichschaumstoffen können offenbar aufgrund ihres Charakters in der PUR-Matrix untergebracht werden, wobei das mechanische Eigenschaftsniveau nur durch Rezepturänderungen gehalten werden kann. Andere feinverteilte Feststoffe (z.B. Melamin, Ammoniumpolyphosphat) wurden in der Praxis in PUR-Hartschaumstoffen bislang nicht eingesetzt, da neben verschiedenen Problemen (Lunkerbildung, Offenzelligkeit, schlechten mechanischen Kenndaten) als Hauptproblem Schaumstoffsprödigkeit auftrat (vergl. Tabelle 1, Beispiel 1 und 2 in Relation zu Tabelle 2, Beispiel 3 bis 11), die eine praktische Anwendung derartig gefüllter PUR-Hartschaumstoffe ausschloß.

Überraschenderweise wurde nun gefunden, daß, z.B. bei einer Arbeitsweise mit einer Vorrichtung gemäß DE-A 38 41 671, EP-A 431 388, PUR-Hartschaumstoffpulver in erstaunlich grober Körnung in einer Menge bis zu 10 Gew.-% in PUR-Hartschaumstoff niedriger Rohdichte eingesetzt werden kann, ohne daß die obengenannten Verschlechterungen (z.B. Sprödigkeit) auftreten.

Während andere feste Füllkörper (Tabelle 1) die Rohdichte und Schaumstoffsprödigkeit erhöhen, aber keinen positiven Einfluß auf die mechanischen Eigenschaften (z.B. Wärmebiegefestigkeit) haben, wird bei der erfindungsgemäßen Arbeitsweise Polyol und Isocyanat gewichtsmäßig durch festes Polyurethanpulver ersetzt, wobei bei vergleichbarer Rohdichte gleiche Eigenschaften wie beim ungefüllten Schaumstoff erhalten werden (Tabelle 2). Eine Verschlechterung der Sprödigkeit tritt nicht auf.

Gegenstand der Erfindung ist ein Verfahren zur Herstellung von harten Urethan- und gegebenenfalls Isocyanuratgruppen aufweisenden Schaumstoffen durch Umsetzung von
a) Polyisocyanaten mit
b) mindestens zwei gegenüber Isocyanaten reaktionsfähige Wasserstoffatome aufweisenden Verbindungen vom Molekulargewicht 400 bis 10 000 in Gegenwart von
c) organischen Füllstoffen und in Gegenwart von
d) Wasser und/oder leicht flüchtigen organischen Substanzen als Treibmittel und gegebenenfalls in Gegenwart von
e) mindestens zwei gegenüber Isocyanaten reaktionsfähige Wasserstoffatome aufweisenden Verbindungen vom Molekulargewicht 32 bis 399 sowie gegebenenfalls in Gegenwart von
f) an sich bekannten Hilfs- und Zusatzmitteln,
dadurch gekennzeichnet, daß man als organischen Füllstoff c) ein Polyurethan-Hartschaumpulver verwendet.

Die Korngröße des erfindungsgemäß einzusetzenden Polyurethan-Hartschaumpulvers liegt vorzugsweise im Bereich 0,3 bis 2,0 mm, bevorzugt 0,5 bis 1,0 mm. Bevorzugt sind daher gefüllte PUR-Hartschaumstoffe, die PUR-Hartschaumpulver von 0,5 bis 1,0 mm Durchmesser enthalten.

Erfindungsgemäß können ebenfalls Polyurethan-Hartschaumpulver verwendet werden, die herstellungsbedingt noch Verunreinigungen enthalten, wie z.B. Papier oder Fasern.

Für die Herstellung der harten Urethangruppen und gegebenenfalls Isocyanuratgruppen aufweisenden Schaumstoffe werden eingesetzt:
a) aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

   Q(NCO)ₙ

   in der
   n = 2-4, vorzugsweise 2-3,
   und
   Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromafischen Kohlenwasserstoffrest mit 6-15, vorzugsweise 6-13 C-Atomen oder einen araliphatischen Kohlenwasserstoffrest mit 8-15, vorzugsweise 8-13 C-Atomen bedeuten, z.B. solche Polyisocyanate, wie sie in der DE-OS 28 32 253, Seiten 10-11, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.
b) Ausgangskomponenten sind ferner Verbindungen mit mindestens zwei gegenüber Isocyanaten reaktionsfähigen Wasserstoffatomen von einem Molekulargewicht in der Regel von 400-10.000. Hierunter versteht man neben Aminogruppen, Thiogruppen oder Carboxylgruppen aufweisende Verbindungen vorzugsweise Hydroxylgruppen aufweisende Verbindungen, insbesondere 2 bis 8 Hydroxylgruppen aufweisende Verbindungen, speziell solche vom Molekulargewicht 1000 bis 6000, vorzugsweise 2000 bis 6000, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der DE-OS 28 32 253, Seiten 11-18, beschrieben werden.
c) Als organische Füllstoffe werden die bereits näher genannten Polyurethan-Hartschaumpulver eingesetzt.
d) Als Treibmittel werden Wasser und/oder die an sich bekannten leicht flüchtigen organischen Substanzen verwendet, vorzugsweise Pentan, Isopentan, Cyclopentan, Hexafluorbutan, Pentafluorpropan.
e) Weitere Ausgangskomponenten sind gegebenenfalls Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19-20, beschrieben.
f) Gegebenenfalls werden Hilfs- und Zusatzmittel mitverwendet wie
   - Katalysatoren der an sich bekannten Art in Mengen von bis zu 10 Gew.-%, bezogen auf die Komponente b),
   - oberflächenaktive Zusatzstoffe, wie Emulgatoren und Schaumstabilisatoren,
   - Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trikresylphosphat, ferner Stabilisatoren gegen Alterungs- und Witterungseinflüsse, Weichmacher und fungistatisch und bakteriostatisch wirkende Substanzen sowie weitere Füllstoffe wie Bariumsulfat, Kieselgur, Ruß- oder Schlämmkreide.

Diese gegebenenfalls mitzuverwendenden Hilfs- und Zusatzstoffe werden beispielsweise in der DE-OS 27 32 292, Seiten 21-24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und anderen Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113 beschrieben.

Durchführung des Verfahrens zur Herstellung von harten Polyurethanschaumstoffen:
Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205, beschrieben.

Die Schaumstoffe können z.B. durch Blockverschäumung oder nach dem an sich bekannten Doppeltransportbandverfahren hergestellt werden.

Die nach der Erfindung erhältlichen Produkte finden z.B. als Dämmplatten für die Dachisolierung Anwendung.

### Ausführungsbeispiele

Zur Herstellung der Polyurethanschaumstoffe wurden die Polyol-Formulierungen A und B verwendet (GT = Gewichtsteile)

### Formulierung A

Polyolgemisch einer OH-Zahlo von 553 bestehend aus:
1. 26,9 GT eines Polyetherpolyols der OH-Zahl 380, das durch Propoxylierung eines Gemisches aus Saccharose, Propylenglykol und Wasser erhalten wurde,
2. 22,0 GT eines Polyetherpolyols der OH-Zahl 620, das durch Propoxylierung von Ethylendiamin erhalten wurde,
3. 16,0 GT eines Polyetherpolyols der OH-Zahl 445, das durch Propoxylierung eines Saccharose-/Ethylen-Glykol-Gemisches erhalten wurde,
4. 13,0 GT eines Polyetherpolyols der OH-Zahl 460, das durch Propoxylierung und Ethoxylierung von ortho-Toluylendiamin erhalten wurde,
5. 10,0 GT Glycerin als Vernetzer,
6. 1,6 GT Wasser als Co-Treibmittel,
7. 9,0 GT Tris(β-chlorisopropyl)phosphat als Flammschutzmittel und
8. 1,5 GT eines polyetherpolyolmodifizierten Polysiloxans als Schaumstabilisator.

### Formulierung B

Polyolgemisch einer OH-Zahl von 404 bestehend aus:
1. 34,0 GT eines Polyetherpolyols der OH-Zahl 380, das durch Propoxylierung eines Gemisches aus Saccharose, Propylenglykol und Wasser erhalten wurde,
2. 35,0 GT eines Polyetherpolyols der OH-Zahl 550, das durch Propoxylierung von Trimethylolpropan erhalten wurde,
3. 19,0 GT eines Polyetherpolyols der OH-Zahl 435, das durch Propoxylierung eines Gemisches aus Phthalsäure, Sorbit und Diethylenglykol erhalten wurde,
4. 10,0 GT Tris-(β-chlorisopropyl)phosphat als Flammschutzmittel,
5. 0,7 GT Wasser als Co-Treibmittel und
6. 1,3 GT eines polyetherpolyolmodifizierten Polysiloxans als Schaumstabilisator.

Die Polyolformulierungen A bzw. B wurden nach den in den Tabellen 1 und 2 genannten Rezepturen in an sich bekannter Weise zu harten Polyurethanschaumstoffen umgesetzt.

**Tabelle 1**

| Andere Füllstoff-Pulver enthaltende PUR-Hartschaumstoffe | | | |
|---|---|---|---|
| | | Vergleich | |
| Beispiel Nr. | | 1 | 2 |
| Formulierung A | GT | 100 | - |
| Formulierung B | GT | - | 100 |
| Dibutylzinndilaurat¹⁾ | GT | - | 0,012 |
| Desmorapid ® PV¹⁾ | GT | - | 0,25 |
| Dimethylcyclohexylamin¹⁾ | GT | 1,3 | - |
| Solkane S 141b, Fa. Solvay | GT | 22 | 23 |
| Desmodur® VP PU 1584²⁾ | GT | - | 122 |
| Desmodur VP PU 1194²⁾ | GT | 175 | - |
| Melamin³⁾ (Körnung 0,04 mm) | GT | 5 | - |
| Exolit 422⁴⁾ (Körnung 0,024 mm) | GT | - | 5 |
| Rohdichte | kg/m³ | 32,9 | 33,7 |
| Rüttelversuch 600 Rotationen | Gewichtsverlust (%) | 11,8 | 10,7 |
| Wärmebiegefestigkeit | °C | 162 | 126 |

| | | | |
|---|---|---|---|
| 1) Katalysator | | | |
| 2) Polyisocyanatkomponente | | | |
| 3) Melamin (Grade 003, DSM-Chemicals) | | | |
| 4) Exolit® 422, Fa. Hoechst (Ammoniumpolyphosphat) | | | |

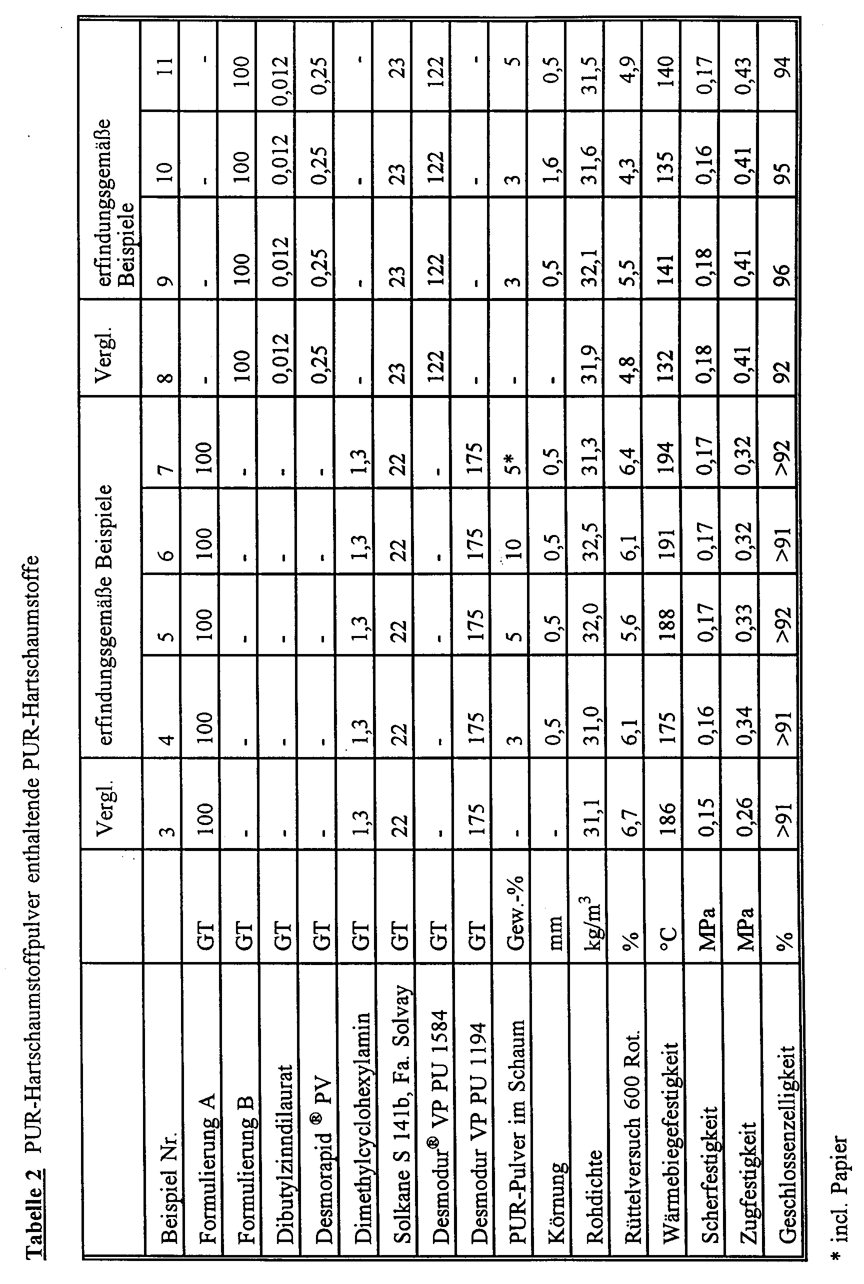

## Patentansprüche

1. Verfahren zur Herstellung von harten Urethan- und gegebenenfalls Isocyanuratgruppen aufweisenden Schaumstoffen durch Umsetzung von
a) Polyisocyanaten mit
b) mindestens zwei gegenüber Isocyanaten reaktionsfähige Wasserstoffatome aufweisenden Verbindungen vom Molekulargewicht 400 bis 10 000 in Gegenwart von
c) organischen Füllstoffen und in Gegenwart von
d) Wasser und/oder leicht flüchtigen organischen Substanzen als Treibmittel und gegebenenfalls in Gegenwart von
e) mindestens zwei gegenüber Isocyanaten reaktionsfähige Wasserstoffatome aufweisenden Verbindungen vom Molekulargewicht 32 bis 399 sowie gegebenenfalls in Gegenwart von
f) an sich bekannten Hilfs- und Zusatzmitteln,
dadurch gekennzeichnet, daß man als organischen Füllstoff c) ein Polyurethan-Hartschaumpulver verwendet.

2. Verfahren gemäß Anspruch 1, dadurch gekennzeichnet, daß das Polyurethan-Hartschaumpulver c) eine Korngröße von 0,3 bis 2,0 mm aufweist.

3. Verfahren gemäß Anspruch 1 und 2, dadurch gekennzeichnet, daß das Polyurethan-Hartschaumpulver c) eine Korngröße von 0,5 bis 1,0 mm aufweist.

4. Verfahren gemäß Anspruch 1 bis 3, dadurch gekennzeichnet, daß das Polyurethan-Hartschaumpulver c) in einer Menge von 0,1 bis 10 Gew.-% [bezogen auf die Komponenten a) bis f] eingesetzt wird.
